# EUROPÄISCHE PATENTSCHRIFT

(11) **EP 2 278 245 B1**
(45) Veröffentlichungstag und Bekanntmachung des Hinweises auf die Patenterteilung: **21.08.2013**
(21) Anmeldenummer: 10006978.0
(22) Anmeldetag: 06.07.2010
(51) Int. Cl.: F27D 19/00, F27B 3/20, F27D 99/00, C21C 5/52

(54) **Verfahren zum Betreiben eines Herdofens**
Method for operating a hearth furnace and hearth furnace
Procédé de fonctionnement d'un four à sole et four à sole

(30) Priorität: 21.07.2009 DE 102009034041; 17.09.2009 EP 09011881
(43) Veröffentlichungstag der Anmeldung: 26.01.2011
(73) Patentinhaber: Linde AG, 80331 München (DE)
(72) Erfinder: Niehoff, Thomas, 85229 Markt Indersdorf (DE)
(74) Vertreter: Gellner, Bernd

(56) Entgegenhaltungen:
- EP-A- 0 168 235
- DE-A1-102004 053 624
- BROTZMANN K ET AL: "NEW APPLICATIONS OF HOT BLAST JETS IN METALLURGICAL PROCESSES//NEUE ANWENDUNGSGEBIETE FUER DEN EINSATZ VON HEISSWINDSTRAHLEN BEI METALLURGISCHEN PROZESSEN" STAHL UND EISEN, VERLAG STAHLEISEN, DUSSELDORF, DE, Bd. 123, Nr. 6/07, 16. Juni 2003 (2003-06-16), Seiten 67-72, XP001177256 ISSN: 0340-4803

## Beschreibung

Die vorliegende Erfindung betrifft ein Verfahren zum Betreiben eines Herdofens zum Schmelzen eines metallhaltigen Materials, wobei der Herdofen einen Ofenraum aufweist, der mittels mindestens eines Brenners beheizt wird, wobei das Verfahren folgende Schritte umfasst:
a) Einbringen des metallhaltigen Materials in den Herdofen,
b) Schmelzen des metallhaltigen Materials in einer ersten Schmelzphase bis sich eine Schmelzbadoberfläche ausgebildet hat,
c) Schmelzen des metallhaltigen Materials in einer zweiten Schmelzphase nach Ausbildung einer Schmelzbadoberfläche,
d) Abziehen und/oder Halten des geschmolzenen Materials.

Zum Schmelzen von Metall, wie z.B. Kupfer, Aluminium, Blei oder Eisen, werden bekanntlich Schmelzöfen unterschiedlicher Bauarten eingesetzt. Es kommen z.B. Herdöfen, Drehtrommelöfen und Turmöfen zum Einsatz. In der Regel werden derartige Öfen noch auf sehr ursprüngliche Art und Weise betrieben, indem ein Mitarbeiter als Ofenverantwortlicher den Schmelzprozess überwacht und steuernd eingreift, sobald ihm ein solches Eingreifen erforderlich erscheint. Da die Prozessbedingungen und die Ausgangsstoffe, z.B. hinsichtlich der Qualität und Herkunft des zu schmelzenden Metallschrotts, stark variieren sowie unterschiedliche Mitarbeiter den Schmelzprozess auf verschiedene Art und Weise steuern, kommt es in der Praxis oft zu erheblichen Abweichungen im Ergebnis oder auch in der Effizienz mit der ein solcher Schmelzofen betrieben werden kann.

Es gibt erste Versuche, besonders im Bereich der Drehtrommelöfen, durch den Einsatz von Sensoren für ausgewählte Betriebsparameter, wie z.B. die Temperatur an bestimmten Stellen im Inneren eines Schmelzofens, eine vergleichmäßigte, sich zwischen den einzelnen Schichten der Ofenverantwortlichen wenig unterscheidende Betriebsweise für einen Schmelzofen zu erzielen. Für den Betrieb eines Drehtrommelofens sind eine Reihe von Möglichkeiten dazu beispielsweise der Druckschrift US 2006/0199125 A1 zu entnehmen.

In dem Artikel "New applications of hot blast jets in metallurgical processes" von K. Brotzmann et al, Stahl und Eisen, Verlag Stahleisen, Düsseldorf, Bd. 123, Nr. 6/07, Seiten 67 bis 72, wird das Verhalten von Heißwindstrahlen bei der Nachverbrennung von Prozessgasen beschrieben.

Der vorliegenden Erfindung liegt die Aufgabe zugrunde, ein Verfahren zum Betreiben eines Herdofens zur Verfügung zu stellen, der im Hinblick auf die Steuerung des Betriebs und die Anpassbarkeit desselben an die jeweilige Schmelzaufgabe verbessert ist.

Die gestellte Aufgabe wird durch ein Verfahren der eingangs genannten Art gelöst, wobei mindestens einer der Brenner während der ersten Schmelzphase (b) so betrieben wird, dass ein höherer Anteil an der Brennerleistung in Form von Konvektion abgegeben wird als in Form von Strahlungsenergie und die jeweiligen Anteile an Konvektionswärme und an Strahlungswärme, die der mindestens eine Brenner abgibt, über den Sauerstoffanteil der dem Brenner zugeführten Gase eingestellt werden, wobei der Brenner in der zweiten Schmelzphase mit einem Oxidationsmittel betrieben wird, welches einen Sauerstoffanteil besitzt, der höher ist als der des Oxidationsmittels, welches dem Brenner in der ersten Schmelzphase zugeführt wird.

Bei einem Herdofen mit direkter Chargierung wird das zu schmelzende Material direkt in den Ofenraum des Herdofens eingebracht. Der Ofenraum wird durch eine Ofensohle, die auch als Herd bezeichnet wird, und ein Ofengewölbe begrenzt, die zusammen den Ofenraum umgeben. In der ersten Schmelzphase (b) nach der Chargierung, d.h. nach dem Einbringen des zu schmelzenden Materials, befindet sich bei einem Herdofen mit direkter Chargierung viel festes, noch nicht geschmolzenes Metall im Ofenraum.

Ein Herdofen mit indirekter Chargierung unterscheidet sich von einem Herdofen mit direkter Chargierung durch das Vorhandensein eines dem Ofenraum vorgelagerten Chargierraums. Das zu schmelzende Material wird zunächst in den Chargierraum eingebracht und aufgeschmolzen. Aus dem Chargierraum wird das flüssige Metall in den Ofenraum gepumpt, dort homogenisiert und weiter überhitzt. Die erste Schmelzphase findet bei indirekter Chargierung daher in diesem Chargierraum statt.

In der ersten Schmelzphase nach der Chargierung liegt in beiden Fällen ein Großteil des zu schmelzenden Materials, beispielsweise Metalls, "im Schatten". Dieser Teil des Materials kann daher durch Wärmestrahlung kaum erwärmt werden. In dieser Schmelzphase soll erfindungsgemäß mindestens ein Brenner so betrieben werden, dass ein höherer Anteil an der Brennerleistung in Form von Konvektion abgegeben wird als in Form von Strahlungsenergie. Ein hoher Anteil an Konvektionswärme bedeutet, dass eine große Menge heißen Gases vorliegt, welches auch in die Bereiche zwischen den festen Materialien eindringen kann. So werden auch die Bereiche des zu schmelzenden Materials erwärmt, die von der durch die Flamme des Brenners hervorgerufenen Wärmestrahlung nicht oder nur kaum erfasst werden. Das Umwälzen des Gases im Ofenraum erfolgt vorteilhaft durch die der Konvektion eigene Strömung der heißen Gase.

Gleichzeitig soll erfindungsgemäß in der ersten Schmelzphase nach der Chargierung die Strahlungsleistung, d.h. der Anteil der Brennerleistung, den der oder die Brenner in Form von Strahlungsenergie abgeben niedriger sein als der Anteil der Konvektion. Dies ist besonders vorteilhaft, da aufgrund der fehlenden Materialumwälzung in der ersten Schmelzphase immer dasselbe Material, d.h. dieselben noch nicht oder nur teilweise geschmolzenen Metallteile, der Wärmestrahlung ausgesetzt sind und es deshalb bei einem hohen Energieeintrag über Strahlungswärme zu einer Überhitzung und Verbrennung des Materials kommen kann. Dies ist nicht erwünscht, da dabei wertvolles Material während des Schmelzprozesses verloren gehen würde.

Es hat sich gezeigt, dass bei einem Herdofen der Flammencharakteristik eine ganz besondere Bedeutung zukommt.

Die Einstellung der Anteile an Konvektionswärme und Strahlungswärme an der von dem mindestens einen Brenner abgegebenen Brennerleistung wird erfindungsgemäß über die Einstellung der Flamme des mindestens einen Brenners erreicht, wobei gefunden wurde, dass die Einstellung der Helligkeit der Flamme und/oder der Größe der Flamme und dabei insbesondere die Flammenlänge entscheidend die Verteilung der oben genannten Anteile bestimmen. Dabei steht eine hohe Helligkeit der Flamme für einen hohen Strahlungsanteil und umgekehrt eine geringe Flammenhelligkeit und/oder eine hohe Verbrennungsgasmenge für einen geringeren Anteil an Strahlungsenergie an der abgegebenen thermischen Gesamtenergie und einen entsprechend höheren Anteil an Konvektionswärme, der durch die Brennerflamme abgegeben wird. Dabei wird hier davon ausgegangen, dass die Summe aus der Konvektionswärme und der Strahlungswärme im Wesentlichen der abgegebenen thermischen Gesamtenergie der Flamme entspricht.

Die Flammencharakteristik, insbesondere die Flammenhelligkeit und/oder Flammengröße, werden erfindungsgemäß durch Steuerung des Sauerstoffanteils der dem Brenner zugeführten Gase gesteuert. Das dem oder den Brennern zugeführte Oxidationsmittel besitzt je nach gewünschter Flammencharakteristik und damit nach gewünschtem Wärmeübertragungsmechanismus einen Sauerstoffgehalt zwischen 21 Vol-%, d.h. Verwendung von Luft, und 100 Vol-%, d.h. Verwendung reinen Sauerstoffs. So wird dem Brenner zur Erzielung einer großen Strahlungsleistung ein Oxidationsmittel mit einem höheren Sauerstoffanteil zugeführt als zur Erreichung eines großen konvektiven Anteils an der Brennerleistung. Beispielsweise werden in der ersten Schmelzphase der oder die Brenner als Luftbrenner betrieben, ggfs. mit geringfügiger Sauerstoffanreicherung der Luft, während in der zweiten Schmelzphase als Oxidationsmittel stark mit Sauerstoff angereicherte Luft oder technisch reiner Sauerstoff eingesetzt wird.

In der ersten Schmelzphase wird mindestens ein Brenner mit einem Oxidationsmittel betrieben, welches einen geringen Sauerstoffanteil besitzt, d.h. zum Beispiel Luft oder geringfügig mit Sauerstoff angereicherte Luft. Das Oxidationsmittel hat in dieser Phase beispielsweise einen Sauerstoffanteil von weniger als 50 Vol-%, weniger als 40 Vol-%, weniger als 30 Vol-% oder weniger als 25 Vol-%.

In der zweiten Schmelzphase wird mindestens ein Brenner mit einem Oxidationsmittel betrieben, welches einen relativ hohen Sauerstoffanteil besitzt, jedenfalls einen Sauerstoffanteil, der höher ist als der des Oxidationsmittels in der ersten Schmelzphase. In der zweiten Schmelzphase wird daher bevorzugt mit Sauerstoff angereicherte Luft oder reiner Sauerstoff als Oxidationsmittel verwendet. Das Oxidationsmittel hat in dieser Phase beispielsweise einen Sauerstoffanteil von mehr als 50 Vol-%, mehr als 70 Vol-%, mehr als 90 Vol-%, mehr als 95 Vol-% oder sogar von 100 Vol-%.

In einer Ausführungsform der Erfindung werden in der ersten Schmelzphase alle in Betrieb befindlichen Brenner so eingestellt, dass ein höherer Anteil an der Brennerleistung in Form von Konvektion abgegeben wird als in Form von Strahlungsenergie. In der zweiten Schmelzphase werden entsprechend alle in Betrieb befindlichen Brenner so eingestellt, dass ein höherer Anteil an der Brennerleistung in Form von Strahlungsenergie abgegeben wird als in Form von Konvektion. Vorzugsweise überwiegt also in der ersten Schmelzphase die in Form von Konvektion auf das Material übertragene Brennerleistung, während in der zweiten Schmelzphase das Material stärker durch Strahlungsleistung als durch Konvektion erwärmt wird.

Beim Übergang von der ersten in die zweite Schmelzphase können die oder ein Teil der Brenner entweder mit einem höheren Sauerstoffanteil weiterbetrieben werden, d.h. der Sauerstoffanteil in dem den Brennern zugeführten Oxidationsmittel wird beim Umschalten in die zweite Schmelzphase erhöht, oder die oder ein Teil der Brenner werden ausgeschaltet und andere Brenner, die mit einem höheren Sauerstoffanteil im Oxidationsmittel arbeiten, werden zugeschaltet.

Ziel der vorliegenden Erfindung ist es also über die Einstellung der Flammencharakteristik den Schmelzprozess in einem Herdofen zu optimieren. In Abhängigkeit von der Flammencharakteristik wird der Sauerstoffanteil im Oxidationsmittel so gesteuert, dass die vom Brenner zugeführte Energie entweder überwiegend in Form von Strahlung oder überwiegend in Form von Konvektion auf das Material übertragen wird. Zum Beispiel wird die Helligkeit der Flamme mindestens eines Brenners gemessen. Vorteilhaft wird ein weiterer Betriebsparameter, wie z.B. die Temperatur des Schmelzbades ermittelt und, je nachdem ob sich der Schmelzprozess in der ersten (b) oder in der zweiten (c) Schmelzphase befindet, eine bestimmte Helligkeit der Flammen des Brenners eingestellt.

Die erste Schmelzphase ist **dadurch gekennzeichnet, dass** ein Großteil des Materials im Ofenraum noch in fester Form vorliegt. Es findet daher im Wesentlichen keine Umwälzung des Materials statt. Der Beginn der zweiten Schmelzphase ist **dadurch gekennzeichnet, dass** sich bereits ein flüssiges Schmelzbad ausgebildet hat. Vorzugsweise wird der Übergang von erster zu zweiter Schmelzphase durch den Zeitpunkt bestimmt, zu dem mehr als 80%, besonders bevorzugt mehr als 90% des gesamten im Ofenraum oder im Chargierraum befindlichen Materials geschmolzen sind. Ganz besonders bevorzugt wird als Beginn der zweiten Schmelzphase die Phase angesehen, in der das gesamte zu schmelzende Material in die flüssige Phase übergegangen ist.

Die Erfindung dient vorzugsweise dazu, Kupfer, Aluminium, Blei oder Eisen enthaltendes Material zu schmelzen. Insbesondere eignet sich das erfindungsgemäße Verfahren zur Gewinnung der genannten Metalle aus dem zu schmelzenden Ausgangsmaterial.

Zweckmäßigerweise werden vom Ofenführer für den Durchsatz an Brenngas und Oxidationsmittel durch den Brenner, z.B. für eine teilautomatisierte Steuerung, zunächst bestimmte Werte vorgewählt. Die Messung der Helligkeit ergibt dann eine Bestätigung dieser ersten Einstellung als richtig oder zeigt einen Korrekturbedarf an, dem der Ofenführer durch erneutes Einstellen bzw. Anpassen der genannten Werte nachkommt. Auf diese Weise wird unter Zuhilfenahme der Helligkeit der Flamme des Brenners der Betrieb bzw. die Ofenfahrweise gesteuert.

Erfindungsgemäß können für mehr als einen Brenner, z.B. für zwei oder drei Brenner, auch unterschiedliche Zielwerte an Helligkeit für jede der Flammen vorgesehen werden. Das heißt, der Ofenraum wird an unterschiedlichen Stellen unterschiedlich beheizt. Beispielsweise kann ein Bereich des Ofenraums, in dem das Material bereits vollständig in die flüssige Phase übergegangen ist, mit einem höheren Anteil an Strahlungsenergie beheizt werden als ein Bereich des Ofenraums, in dem sich noch festes Ausgangsmaterial befindet.

Bevorzugt werden ein oder mehrere mit Luft als Oxidationsmittel betriebene Brenner eingesetzt. Dadurch wird ein hoher Anteil an der Abgabe der Brennerleistung in Form von Konvektionswärme einstellbar. Dies ist, wie bereits beschrieben, für die erste Schmelzphase (b) von besonderer Bedeutung. Es können gemäß der Erfindung sowohl spezielle Luftbrenner als auch als Luftbrenner betreibbare Brenner zum Einsatz kommen. Das entscheidende Merkmal beider Möglichkeiten ist, dass bei der Verbrennung mit Luft als Oxidationsmittel der in der Luft enthaltene Stickstoff bei der Verbrennung nicht umgesetzt, also als inertes Gas erhalten bleibt, jedoch bei der Verbrennung erwärmt wird und somit als heißes Gas in relativ großer Menge für die Konvektion zur Verfügung steht.

Gemäß einer besonders vorteilhaften Ausgestaltung der Erfindung wird mindestens einer der Brenner während der zweiten Schmelzphase (c) so betrieben, dass ein höherer Anteil an der Brennerleistung in Form von Strahlungsenergie abgegeben wird als in Form von Konvektion und die jeweiligen Anteile an Konvektionswärme und an Strahlungswärme, die der mindestens eine Brenner abgibt, gezielt über die Einstellung der Helligkeit und/oder Größe, insbesondere Länge, der Flamme des mindestens einen Brenners eingestellt werden. Die zweite Schmelzphase (c) beginnt, wenn sich eine Schmelzbadoberfläche ausgebildet hat.

Für die Verfahrensführung in der zweiten Schmelzphase wird vorzugsweise zwischen zwei in der Praxis häufig anzutreffenden Ausgestaltungen eines Herdofens unterschieden: Der Herdofen mit einer Einrichtung zur Umwälzung des Schmelzbades und der Herdofen ohne eine solche Einrichtung. Je nachdem, welche dieser beiden Ausgestaltungen vorliegt, ist erfindungsgemäß eine andere Einstellung für die Flammencharakteristik des mindestens einen Brenners von Vorteil.

Weist der eingesetzte Herdofen eine Einrichtung zur Umwälzung des Schmelzbades auf, so wird gemäß der Erfindung ein hoher Anteil an Strahlungsleistung an der Leistung, die von dem mindestens einen erfindungsgemäßen Brenner abgegeben wird, angestrebt. Erfahrungsgemäß korreliert eine hohe Strahlungsleistung des Brenners mit einer sehr hellen Flamme des Brenners. Die Helligkeit der Flamme wird erfindungsgemäß zur Einschätzung und Einstellung der Strahlungsleistung einer Flamme herangezogen. Eine hohe Helligkeit entspricht dabei einer hohen Strahlungsleistung, wohingegen eine geringe Helligkeit einer geringen Strahlungsleistung entspricht. Zusätzlich korreliert mit einer geringen Strahlungsleistung ein hoher Konvektionsanteil an der vom Brenner abgegebenen Brennerleistung. Damit sind beide Anteile z.B. über die Helligkeit der Flamme des Brenners mess- und einstellbar.

Eine Möglichkeit, um in der Praxis die Helligkeit der Flamme zu beeinflussen, stellt z.B. das Betreiben des betreffenden Brenners mit einem Oxidationsmittel dar, das einen gegenüber Luft erhöhten Sauerstoffanteil aufweist. Die Möglichkeiten reichen hier von einem leicht erhöhten Sauerstoffanteil bis hin zur Verwendung eines reinen Oxyfuel-Brenners, d.h. eines Brenners, der mit technisch reinem Sauerstoff als Oxidationsmittel betrieben wird. Das Oxidationsmittel kann beispielsweise einen gegenüber Luft nur leicht erhöhten Sauerstoffanteil von beispielsweise 25 Vol-% bis 40 Vol-% besitzen oder aber auch einen sehr hohen Sauerstoffanteil von mehr als 90 Vol-% bis zu 100 Vol-% Sauerstoff.

Anders hingegen sieht die Vorgehensweise bei einem Herdofen ohne eine Einrichtung zur Umwälzung des Schmelzbades aus: Bei einer derartigen Ausgestaltung ist es vorteilhaft, die Strahlungsleistung des mindestens einen erfindungsgemäßen Brenners so zu begrenzen, dass keine unerwünschte Verbrennung von geschmolzenem Metall an der Oberfläche des Schmelzbades auftritt. Zu einer solchen Verbrennung kann es kommen, wenn die Erwärmung des Metallbades zu hoch gewählt wurde, da ohne Umwälzung permanent der immer gleiche sich an der Oberfläche befindende Teil der Metallschmelze den Großteil der Strahlungsleistung aufnehmen muss. Mit besonderem Vorteil wird für einen Herdofen ohne Einrichtung zur Umwälzung des Schmelzbades eine Flamme mit geringer Helligkeit oder auch eine nicht sichtbare Flamme eingesetzt. Letztere wird auch als flammenlose Verbrennung bezeichnet. Für die flammenlose Verbrennung können sowohl speziell für die flammenlose Verbrennung konzipierte Brenner eingesetzt werden als auch konventionelle Brenner flammenlos betrieben werden.

In allen beschriebenen Fällen wird mit besonderem Vorteil zusätzlich zur Helligkeit der Flamme, oder allgemein gesprochen der Flammencharakteristik, auch die Brennerleistung, wie aus dem Stand der Technik bekannt, gesteuert oder geregelt.

Die Größe der Flamme und der von der Flamme eingenommene Raum sind ein Maß dafür, wie die Wärme der Verbrennung sich im Ofenraum und in dem zu schmelzenden Material verteilt. Je nach Prozessschritt können bestimmte Ofenteile relativ heiß oder kalt sein. So sind beispielsweise unmittelbar nach dem Chargieren bestimmte Ofenteile relativ kalt. Durch Regelung des Flammenvolumens können solche Temperaturgefälle im Ofen schnell ausgeglichen werden, wodurch der Schmelzprozess homogenisiert wird.

Mit besonderem Vorteil wird also die Flamme hinsichtlich ihrer Helligkeit und/oder Größe, insbesondere Länge und/oder Volumen, für die erste Schmelzphase (b) und die zweite Schmelzphase (c) voneinander verschieden eingestellt.

Vorteilhafterweise werden ein oder mehrere mit einem sauerstoffhaltigen Gas, dessen Sauerstoffgehalt höher als der von Luft ist, insbesondere mit technisch reinem Sauerstoff, betriebene Brenner eingesetzt. Die Vorteile und Anwendungsfälle dieser Vorgehensweise wurden bereits beschrieben. Besonders vorteilhaft werden ein oder mehrere derartige Brenner während der zweiten Schmelzphase (c) eingesetzt.

Alternativ oder ergänzend zum Einsatz von Luftbrennern wird mit besonderem Vorteil ein Teil des Ofengases zur Erhöhung der Konvektion im Ofenraum umgewälzt. Dazu werden Ofengase aus dem Ofenraum abgesaugt und dem Ofenraum wieder zugeführt, wodurch eine Erhöhung der Konvektion durch diese erwärmten, aufgrund der Umwälzung strömenden Gasmengen erreicht wird.

Bevorzugt wird die Helligkeit und/oder Größe der Flamme je eines oder mehrerer Brenner in Abhängigkeit von der Temperatur des Schmelzbades geregelt.

Darüberhinaus gibt es eine Vielzahl weiterer zur Steuerung oder Regelung des Herdofens mit Vorteil heranziehbare Parameter, wie z.B. die Zusammensetzung der Ofenatmosphäre. Mit besonderem Vorteil kann also z.B. die Helligkeit der Flamme in Abhängigkeit von der Zusammensetzung der Ofenatmosphäre eingestellt werden, die zu diesem Zweck mit geeigneten Mitteln gemessen wurde, oder zumindest die Anteile der Hauptkomponenten der Ofenatmosphäre bestimmt wurden. Weitere Möglichkeiten für besonders geeignete Parameter werden in den unten folgenden Beispielen näher erläutert.

Gemäß einer besonders zweckmäßigen Weiterbildung der Erfindung wird die Helligkeit der Flamme über eine UV-Sonde gemessen. Dazu können eine oder mehrere UV-Sonden im Ofenraum vorgesehen werden.

Alternativ dazu kann mit besonderem Vorteil ein Sichtfenster in der Chargiertür des Herdofens oder im Ofengewölbe oder der Ofenwandung vorgesehen sein, durch welches Sichtverbindung zwischen einer außerhalb des Ofenraums angebrachten UV-Sonde und der Flamme des mindestens einen gemäß der Erfindung betriebenen Brenners besteht und somit die Helligkeit der Flamme mit Hilfe der UV-Sonde gemessen werden kann. Erfindungsgemäß können auch mehrere Sichtfenster und mehrere UV-Sonden vorgesehen sein.

Als Alternative zur Messung der Helligkeit der Flamme während des Schmelzbetriebes, wie vorstehend beschrieben, kann es für bestimmte Anwendungsfälle vorteilhaft sein, vorab, also vor Beginn des Schmelzprozesses, eine empirische Bestimmung der Helligkeit der Flamme durchzuführen, so dass bestimmten Betriebsparametern, wie z.B. dem Sauerstoffdurchsatz durch den zu beurteilenden Brenner oder den diesen Brenner betreffenden Brenngasdurchsatz, bestimmte Flammentemperaturen und damit eine der jeweiligen Flammentemperatur entsprechende Helligkeit der Flamme zugeordnet werden können. Die Korrelation der Flammenhelligkeit bzw. Flammentemperatur mit diesen Betriebsparametern kann dazu genutzt werden, um die Helligkeit der Flamme anhand der momentan vorliegenden Betriebsparameter zu bestimmen. So können beispielsweise anstatt einer direkten Messung der Helligkeit der Flamme der Durchsatz an Oxidationsmittel und Brenngas bestimmt werden und aus diesen Größen auf die Flammenhelligkeit geschlossen werden. Der empirisch bestimmte Zusammenhang zwischen Betriebsparameter, z.B. Sauerstoff- und Brenngasdurchsatz, erlaubt damit einen Rückschluss auf die relativen und/oder absoluten Anteile an Strahlungs- und Konvektionsleistung des Brenners.

Eine vorteilhafte Weiterbildung der Erfindung sieht vor, dass zur Erfassung der Betriebsparameter eine elektronische Datenerfassung sowie Mittel zur Auswertung der erfassten Daten eingesetzt werden.

Eine weitere besonders vorteilhafte Ausgestaltung der Erfindung sieht vor, dass Mittel zum Steuern und/oder Regeln und/oder Optimieren und/oder vollautomatischen Betreiben des Schmelzprozesses eingesetzt werden, die auf die elektronisch erfassten Betriebsparameter als Eingangsgrößen zugreifen.

Bevorzugt sind dabei Mittel zur Erfassung der Helligkeit und/oder der Größe, insbesondere der Länge, der Flamme von mindestens einem der Brenner vorgesehen, besonders bevorzugt ist eine UV-Sonde als Mittel dazu vorgesehen. Die Bestimmung der Größe und/oder Länge der Flamme wird bevorzugt über eine optische Kontrolle durchgeführt, beispielsweise durch Vorsehen eines oder mehrerer geeigneter Sichtfenster in der Chargiertüre und/oder dem Ofengewölbe und/oder der Ofenwandung des Herdofens.

Mit besonderem Vorteil sind Brenner von unterschiedlichem Typ in einem Herdofen vorgesehen, z.B. Luft- und Sauerstoffbrenner (Oxyfuel-Brenner), wobei es durch die Auswahl, welche der Brenner zeitgleich in Betrieb sind, erfindungsgemäß möglich ist, die Anteile an Konvektion und Strahlungsleistung im Ofenraum und/oder, soweit vorhanden, im Chargierraum und im Ofenraum einzustellen und der jeweiligen Schmelzphase anzupassen bzw. für die jeweilige Schmelzphase zu optimieren. Zur Optimierung ist bevorzugt eine elektronische Datenerfassung und -verarbeitung vorgesehen.

Alternativ zu der vorgenannten Ausgestaltung ist es möglich, denselben Brenner für verschiedene Betriebsarten einzusetzen, also z.B. einen oder mehrere Brenner zwischen einem Betrieb mit Luft als Oxidationsmittel und mit technisch reinem oder weniger reinem Sauerstoff umzuschalten oder denselben Brenner als Brenner für eine flammenlose Verbrennung zu betreiben.

Ein wesentlicher Vorteil der vorliegenden Erfindung ist darin zu sehen, dass ein gleichmäßiges und gleichmäßig gutes, sich zwischen den einzelnen Schichten der Ofenverantwortlichen wenig unterscheidendes Schmelzergebnis für einen Herdofen erreicht wird.

Die Erfindung bietet eine ganze Reihe weiterer Vorteile, von denen im Folgenden nur einige wenige genannt sind: Der Schmelzprozess kann auf einfache Weise optimiert werden, z.B. hinsichtlich der Qualität des Schmelzergebnisses, der Kosten und/oder der Produktivität des Schmelzverfahrens. Darüberhinaus können der Übergang von der ersten Schmelzphase zur zweiten Schmelzphase sowie jede der beiden Schmelzphasen für sich optimiert werden. Nicht zuletzt zeigt die vorliegende Erfindung Möglichkeiten zur elektronischen Steuerung und Automatisierung des Schmelzprozesses auf. Alle erforderlichen Betriebsparameter können über Sensoren, wie z.B. Nanosensoren, erfasst werden.

In den folgenden Beispielen werden weitere zur Steuerung oder Regelung des Schmelzprozesses vorteilhaft heranziehbare Betriebsparameter und Vorgehensweisen erläutert:

### Beispiel 1:

Es besteht die Möglichkeit, das Temperaturprofil der den Ofenraum auskleidenden Feuerfestauskleidung als Betriebsparameter heranzuziehen, gemäß dem die Helligkeit und/oder Größe der Flamme mindestens eines Brenners gesteuert wird. Dazu werden an der Feuerfestauskleidung ein oder mehrere Temperatursensoren angebracht und mit diesen die Temperatur gemessen. Mit besonderem Vorteil ist z.B. ein Temperatursensor an der Decke des Ofengewölbes angebracht.

### Beispiel 2:

Gemäß einer anderen Ausgestaltung kann auch im Abgasstrom des Herdofens die Temperatur und/oder die Zusammensetzung des Abgases gemessen werden und als Betriebsparameter zur Steuerung oder Regelung der Flammencharakteristik herangezogen werden. Darüberhinaus kann es zweckmäßig sein, den Druck im Abgaskanal, durch den das Abgas den Herdofen verlässt, mit Hilfe einer Einrichtung zur Druckmessung zu ermitteln und diesen Wert als Betriebsparameter zur Steuerung oder Regelung des Schmelzprozesses zu verwenden.

### Beispiel 3:

Auch die Position (offen oder geschlossen) der Chargiertüre des Herdofens kann als Betriebsparameter z.B. über einen Sensor erfasst und zur Steuerung oder Regelung des Schmelzprozesses und insbesondere des Brennerbetriebes herangezogen werden. Ebenso verhält es sich mit dem Fortschritt des Chargiervorganges, der ebenfalls als Betriebsparameter im Sinne der Erfindung erfasst und genutzt werden kann.

### Beispiel 4:

Dies ist ein Beispiel für eine halbautomatisierte Ausgestaltung der vorliegenden Erfindung. Der Ofenführer erhält dabei Anweisungen über einen Bildschirm, der als Ausgabemedium für eine elektronische Datenerfassung und -verarbeitung dient und aus geeigneten Betriebsparametern eine klare Handlungsanweisung an den Ofenführer ermittelt. Der Ofenführer greift dann gemäß der Handlungsanweisung steuernd in den Schmelzprozess ein.

Alle oben genannten Varianten können sowohl einzeln als auch in Kombination miteinander eingesetzt werden.

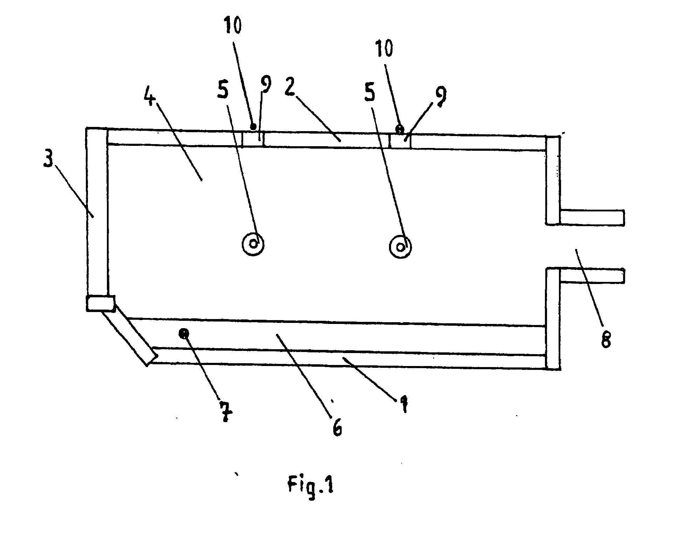

Die Erfindung sowie weitere Ausgestaltungen der Erfindung werden im Folgenden anhand des in der Figur dargestellten Ausführungsbeispiels näher erläutert. Hierbei zeigt die
- Figur: eine schematische Darstellung eines Herdofens mit einem Temperatursensor im Bereich des Schmelzbades und zwei Brennern.

Im Einzelnen zeigt die Figur einen Herdofen zum Schmelzen von Metall mit einer Ofensohle 1 und einem Ofengewölbe 2 sowie einer Chargiertüre 3, über die das zu schmelzende Metall, z.B. Metallschrott, in den Herdofen eingebracht wird. Die Figur zeigt einen Herdofen mit direkter Chargierung.

Ein Ofenraum 4 wird, wie in der Figur gezeigt, von der Ofensohle 1, dem Ofengewölbe 2 sowie von senkrechten Seitenwänden, die auch dem Ofengewölbe zugeordnet werden, und der Chargiertüre 3 umschlossen.

In diesem Ausführungsbeispiel sind zwei Brenner 5 gezeigt, die dazu eingesetzt werden, jeweils alleine oder zusammen den Ofenraum 4 zu beheizen und geeignete Bedingungen zum Schmelzen des in den Ofenraum 4 eingebrachten Metalls zur Verfügung zu stellen. Dazu wird die Flamme mindestens eines der beiden Brenner 5 erfindungsgemäß in Abhängigkeit eines oder mehrerer Betriebsparameters gesteuert. In diesem Beispiel wird als Betriebsparameter die Temperatur des Schmelzbades mit Hilfe eines Temperatursensors 7 gemessen.

Die Helligkeit der Flamme mindestens eines der beiden Brenner 5 wird mittels einer UV-Sonde 10 gemessen. Vorzugsweise werden die Helligkeiten der Flammen beider Brenner 5 gemessen. Die UV-Sonden sind an der Außenseite eines im Wesentlichen senkrecht jeweils über dem betreffenden Brenner 5 im Ofengewölbe 2 angeordneten Sichtfensters 9 angebracht ist.

Bei einer bestimmten Temperatur des Schmelzbades 6 ist, je nachdem ob sich der Schmelzprozess in der ersten (b) oder in der zweiten (c) Schmelzphase befindet, eine bestimmte Helligkeit der Flammen der beiden Brenner 5 erwünscht. Dabei können auch zwei unterschiedliche Zielwerte an Helligkeit für jede der beiden Flammen vorliegen. Für den Durchsatz an Brenngas und Oxidationsmittel werden z.B. für eine teilautomatisierte Steuerung vom Ofenführer für den betreffenden Brenner 5 bestimmte Werte vorgewählt. Die Messung der Helligkeit ergibt dann eine Bestätigung dieser ersten Einstellung als richtig oder zeigt einen Korrekturbedarf an, dem der Ofenführer durch erneutes Einstellen bzw. Anpassen der genannten Werte nachkommt. Auf diese Weise wird unter Zuhilfenahme der Helligkeit der Flamme eines Brenners 5 der Betrieb bzw. die Ofenfahrweise gesteuert.

Mindestens einer der Brenner 5 soll dabei während der ersten Schmelzphase (b) so betrieben werden, dass ein höherer Anteil an der Brennerleistung in Form von Konvektion abgegeben wird als in Form von Strahlungsenergie und die jeweiligen Anteile an Konvektionswärme und an Strahlungswärme, die der mindestens eine Brenner 5 abgibt, gezielt über die Einstellung der Helligkeit der Flamme des mindestens einen Brenners 5 eingestellt werden.

In der ersten Schmelzphase nach der Chargierung liegt ein Großteil des zu schmelzenden Metalls "im Schatten" der Brennerflamme, womit ausgedrückt werden soll, dass dieser Teil des Materials durch Wärmestrahlung kaum erwärmt werden kann, da es von Material, das zwischen der Flamme und diesem Teil des Materials liegt, beschattet wird. Ein hoher Anteil an Konvektionswärme ermöglicht, dass die dazu erforderlichen großen heißen Gasmengen auch in die Bereiche zwischen den festen Materialien eindringen und diese erwärmen.

Mindestens einer der Brenner 5, in diesem Beispiel beide Brenner 5, werden während der zweiten Schmelzphase (c) so betrieben, dass ein höherer Anteil an der Brennerleistung in Form von Strahlungsenergie abgegeben wird als in Form von Konvektion. Die zweite Schmelzphase (c) beginnt, wenn sich eine Schmelzbadoberfläche ausgebildet hat. In diesem Beispiel handelt es sich um einen Herdofen mit einer Einrichtung zur Umwälzung des Schmelzbades 6 (Einrichtung nicht dargestellt). In diesem Fall wird gemäß der Erfindung ein hoher Anteil an Strahlungsleistung an der Leistung, die von jedem der beiden hier gezeigten Brenner 5 abgegeben wird, angestrebt. Erfahrungsgemäß korreliert eine hohe Strahlungsleistung des Brenners 5 mit einer sehr hellen Flamme des Brenners 5. Die Helligkeit der Flamme wird erfindungsgemäß zur Einschätzung und Einstellung der Strahlungsleistung einer Flamme herangezogen.

Mit besonderem Vorteil wird also auch in diesem Beispiel die Flamme hinsichtlich ihrer Helligkeit für die erste Schmelzphase (b) und die zweite Schmelzphase (c) voneinander verschieden eingestellt.

## Patentansprüche

1. Verfahren zum Betreiben eines Herdofens zum Schmelzen eines metallhaltigen Materials, wobei der Herdofen einen Ofenraum (4) aufweist, der mittels mindestens eines Brenners (5) beheizt wird, wobei das Verfahren folgende Schritte umfasst: '
a) Einbringen des metallhaltigen Materials in den Herdofen,
b) Schmelzen des metallhaltigen Materials in einer ersten Schmelzphase bis sich eine Schmelzbadoberfläche ausgebildet hat,
c) Schmelzen des metallhaltigen Materials in einer zweiten Schmelzphase nach Ausbildung einer Schmelzbadoberfläche,
d) Abziehen und/oder Halten des geschmolzenen Materials,
**dadurch gekennzeichnet, dass**
mindestens einer der Brenner (5) während der ersten Schmelzphase (b) so betrieben wird, dass ein höherer Anteil an der Brennerleistung in Form von Konvektion abgegeben wird als in Form von Strahlungsenergie und die jeweiligen Anteile an Konvektionswärme und an Strahlungswärme, die der mindestens eine Brenner (5) abgibt, über den Sauerstoffanteil der dem Brenner zugeführten Gase eingestellt werden, wobei der Brenner in der zweiten Schmelzphase mit einem Oxidationsmittel betrieben wird, welches einen Sauerstoffanteil besitzt, der höher ist als der des Oxidationsmittels, welches dem Brenner in der ersten Schmelzphase zugeführt wird.

2. Verfahren nach Anspruch 1, **dadurch gekennzeichnet, dass** ein dem Ofenraum vorgelagerter Chargierraum mit einer Pumpeinrichtung vorgesehen ist und dass der Chargierraum unbeheizt ist oder über mindestens einen Brenner (5) beheizt wird.

3. Verfahren nach Anspruch 1 oder 2, **dadurch gekennzeichnet, dass** ein oder mehrere mit Luft als Oxidationsmittel betriebene Brenner (5) eingesetzt werden.

4. Verfahren nach einem der Ansprüche 1 bis 3, **dadurch gekennzeichnet, dass** mindestens einer der Brenner (5) während der zweiten Schmelzphase (c) so betrieben wird, dass ein höherer Anteil an der Brennerleistung in Form von Strahlungsenergie abgegeben wird als in Form von Konvektion.

5. Verfahren nach Anspruch 4, **dadurch gekennzeichnet, dass** die Flammen der Brenner (5) hinsichtlich ihrer Helligkeit und/oder Größe für die erste Schmelzphase (b) und die zweite Schmelzphase (c) voneinander verschieden eingestellt werden.

6. Verfahren nach einem der Ansprüche 1 bis 5, **dadurch gekennzeichnet, dass** ein oder mehrere mit einem sauerstoffhaltigen Gas, dessen Sauerstoffgehalt höher als der von Luft ist, betriebene Brenner (5) eingesetzt werden.

7. Verfahren nach einem der Ansprüche 1 bis 6, **dadurch gekennzeichnet, dass** ein Teil des Ofengases zur Erhöhung der Konvektion im Ofenraum (4) umgewälzt wird.

8. Verfahren nach einem der Ansprüche 1 bis 7, **dadurch gekennzeichnet, dass** die Helligkeit und/oder Größe der Flamme von mindestens einem der Brenner (5) in Abhängigkeit von der Temperatur des Schmelzbades geregelt wird.

9. Verfahren nach einem der Ansprüche 1 bis 8, **dadurch gekennzeichnet, dass** die Helligkeit der Flamme über eine UV-Sonde (10) gemessen wird.

10. Verfahren nach einem der Ansprüche 1 bis 9, **dadurch gekennzeichnet, dass** die Betriebsparameter der Brenner elektronisch erfasst und ausgewertet werden.

11. Verfahren nach Anspruch 10, **dadurch gekennzeichnet, dass** der Schmelzprozess gesteuert und/oder geregelt und/oder optimiert und/oder vollautomatisch betrieben wird, wobei auf die elektronisch erfassten Betriebsparameter als Eingangsgrößen zugegriffen wird.

12. Verfahren nach Anspruch 5, **dadurch gekennzeichnet, dass** die Flammen der Brenner (5) hinsichtlich ihrer Länge für die erste Schmelzphase (b) und die zweite Schmelzphase (c) voneinander verschieden eingestellt werden.

13. Verfahren nach Anspruch 6, **dadurch gekennzeichnet, dass** ein oder mehrere mit technisch reinem Sauerstoff betriebene Brenner (5) eingesetzt werden.

## Claims

1. Method for operating a hearth furnace for melting a metal-containing material, the hearth furnace having a furnace chamber (4), which is heated by means of at least one burner (5), the method comprising:
a) introducing the metal-containing material into the hearth furnace,
b) melting the metal-containing material in a first melting phase until a melting bath surface has formed,
c) melting the metal-containing material in a second melting phase after the formation of a melting bath surface, and
d) removing and/or retaining the molten material, **characterized in that**
at least one of the burners is operated during the first melting phase such that a greater proportion of the burner capacity is emitted in the form of convection than in the form of radiant energy and the respective proportions of convection heat and radiant heat that the at least one burner (5) emits are set by way of the oxygen content of the gas supplied to the burner, the burner being operated in the second melting phase with an oxidizing agent which has an oxygen content that is greater than that of the oxidizing agent which is supplied to the burner in the first melting phase.

2. Method according to Claim 1, **characterized in that** a loading chamber upstream of the furnace chamber is provided with a pumping device and **in that** the loading chamber is unheated or is heated by way of at least one burner (5).

3. Method according to Claim 1 or 2, **characterized in that** one or more burners (5) operated with air as an oxidizing agent is/are used.

4. Method according to one of Claims 1 to 3, **characterized in that** at least one of the burners (5) is operated during the second melting phase (c) such that a greater proportion of the burner capacity is emitted in the form of radiant energy than in the form of convection.

5. Method according to Claim 4, **characterized in that** the flames of the burners (5) are set differently from one another with respect to their brightness and/or size for the first melting phase and the second melting phase.

6. Method according to one of Claims 1 to 5, **characterized in that** one or more burners (5) operated with an oxygen-containing gas of which the oxygen content is greater than that of air is/are used.

7. Method according to one of Claims 1 to 6, **characterized in that** part of the furnace gas is circulated to increase the convection in the furnace chamber (4).

8. Method according to one of Claims 1 to 7, **characterized in that** the brightness and/or the size of the flame of at least one of the burners (5) is regulated in dependence on the temperature of the melting bath.

9. Method according to one of Claims 1 to 8, **characterized in that** the brightness of the flame is measured by way of a UV probe (10).

10. Method according to one of Claims 1 to 9, **characterized in that** the operating parameters of the burners are electronically detected and evaluated.

11. Method according to Claim 10, **characterized in that** the melting process is controlled and/or regulated and/or optimized and/or operated fully automatically, using the electronically detected operating parameters as input variables.

12. Method according to Claim 5, **characterized in that** the flames of the burners (5) are set differently from one another with respect to their length for the first operating phase (b) and the second operating phase (c).

13. Method according to Claim 6, **characterized in that** one or more burners (5) is/are used with technically pure oxygen.

## Revendications

1. Procédé de conduite d'un four de fusion d'un matériau contenant des métaux, le four présentant un espace (4) de four chauffé au moyen d'au moins un brûleur (5), le procédé comportant les étapes suivantes :
a) amenée dans le four d'un matériau contenant des métaux,
b) fusion du matériau contenant des métaux dans une première phase de fusion jusqu'à ce qu'une surface de bain de fusion se soit formée,
c) fusion du matériau contenant des métaux dans une deuxième phase de fusion après formation d'une surface de bain de fusion,
d) extraction et/ou maintien du matériau fondu, **caractérisé en ce que**
au moins l'un des brûleurs (5) est conduit pendant la première phase de fusion (b) de telle sorte que la fraction de la puissance du brûleur dégagée sous forme de convection soit plus grande que celle dégagée sous forme d'énergie radiante,
**en ce que** les fractions respectives en chaleur de convection et en chaleur radiante qui sont délivrées par le ou les brûleurs (5) sont ajustées par l'intermédiaire de la teneur en oxygène des gaz apportés dans le brûleur, le brûleur étant conduit dans la deuxième phase de fusion avec un agent d'oxydation qui possède une teneur en oxygène supérieure à celle de l'agent d'oxydation apporté au brûleur pendant la première phase de fusion.

2. Procédé selon la revendication 1, **caractérisé en ce qu'**un espace de chargement prévu dans l'espace du four est doté d'un dispositif de pompage et **en ce que** l'espace de chargement n'est pas chauffé ou est chauffé par l'intermédiaire d'au moins un brûleur (5).

3. Procédé selon les revendications 1 ou2, **caractérisé en ce qu'**un ou plusieurs brûleurs (5) sont conduits avec de l'air comme agent d'oxydation.

4. Procédé selon l'une des revendications 1 à 3, **caractérisé en ce que** pendant la deuxième phase de fusion (c), au moins l'un des brûleurs (5) est conduit de telle sorte que la fraction de la puissance du brûleur délivrée sous forme d'énergie radiante soit plus élevée que celle délivrée sous forme de convection.

5. Procédé selon la revendication 4, **caractérisé en ce que** la luminosité et/ou la taille des flammes du brûleur (5) sont ajustées de manières différentes pendant la première phase de fusion (b) et pendant la deuxième phase de fusion (c).

6. Procédé selon l'une des revendications 1 à 5, **caractérisé en ce qu'**un ou plusieurs brûleurs (5) sont utilisés avec un gaz contenant de l'oxygène dont la teneur en oxygène est supérieure à celle de l'air.

7. Procédé selon l'une des revendications 1 à 6, caractérisé dans ce qu'une partie des gaz du four est mise en circulation pour augmenter la convection dans l'espace (4) du four.

8. Procédé selon l'une des revendications 1 à 7, **caractérisé en ce que** la luminosité et/ou la taille de la flamme d'au moins l'un des brûleurs (5) sont régulées en fonction de la température du bain de fusion.

9. Procédé selon l'une des revendications 1 à 8, **caractérisé en ce que** la luminosité de la flamme est mesurée au moyen d'une sonde UV (10).

10. Procédé selon l'une des revendications 1 à 9, **caractérisé en ce que** les paramètres de conduite du brûleur sont saisis et évalués par voie électronique.

11. Procédé selon la revendication 10, **caractérisé en ce que** l'opération de fusion est commandée, régulée, optimisée et/ou conduite de manière entièrement automatique, les grandeurs d'entrée intervenant étant les paramètres de fonctionnement saisis par voie électronique.

12. Procédé selon la revendication 5, **caractérisé en ce que** la longueur des flammes du brûleur est réglée de manières différentes pendant la première phase de fusion (b) et pendant la deuxième phase de fusion (c).

13. Procédé selon la revendication 6, **caractérisé en ce qu'**un ou plusieurs brûleurs (5) sont conduits avec de l'oxygène techniquement pur.
